# EUROPEAN PATENT SPECIFICATION

(11) **EP 1 365 935 B1**
(45) Date of publication and mention of the grant of the patent: **02.01.2008**
(21) Application number: 02703820.7
(22) Date of filing: 26.02.2002
(51) Int. Cl.: B60J 10/06, B60J 10/00

(54) **SEALING AND GUIDING STRIPS**
DICHTUNGS- UND FÜHRUNGSSTREIFEN
BANDES DE GUIDAGE ET D'ETANCHEITE

(30) Priority: 27.02.2001 GB 0104871
(43) Date of publication of application: 03.12.2003
(73) Proprietor: GDX North America Inc., Dover Delaware 19901 (US)
(72) Inventor: BAUMANN, Michael, 41334 Nettetal (DE)
(74) Representative: Foster, Mark Charles
(86) International application number: PCT/IB2002/000846
(87) International publication number: WO 2002/068234

(56) References cited:
- EP-A- 0 479 430
- EP-A- 0 733 507
- DE-A- 4 339 685
- DE-U- 29 807 479
- FR-A- 2 689 457
- US-A- 6 030 022

## Description

### BACKGROUND OF THE INVENTION

### Field of the invention

The invention relates to a sealing and guiding channel-shaped strip for mounting in a support in use and sealingly and guidingly receiving a panel-like member which enters through the mouth of the channel, in which from the distal edge of one side wall alongside the mouth of the channel a first lip made of flexible material extends partway across the mouth of the channel, the externally facing surface of this lip carrying an applied surface layer which extends over the lip from a region near the distal edge of the lip to a termination on the outside of the said one side wall for bearing against a side surface of the panel-like member when in the channel, and a second lip made of flexible material is positioned on the outside of the said one side wall and extends alongside that wall and outwardly of the mouth of the channel, the material of the second lip being in contact with the said termination of the applied layer. Seals and guiding strips embodying the invention, and to be described below by way of example only, are for use in sealing and guiding slidable panes of window glass in motor vehicle bodies.

### Description of related art

Document DE 298074794 discloses a strip of this kind.

U.K. Patent Specification No. 2085513 further shows a strip as is set out above. In this strip, however, the first and second lips are parts of respectively separate channels which are adhesively or otherwise secured together. Such an arrangement is relatively complex to make.

### BRIEF SUMMARY OF THE INVENTION

In accordance with the invention, the strip as first set forth above is characterised in that the second lip extends integrally from a position on the outside of the said one side wall which is spaced from the mouth of the channel so as to be pressed into the contact with the said termination to produce a sharp visually apparent linear edge thereto when the channel is mounted on the support.

In this way, the first and second lips can be integrally produced and become pressed together to produce an improved appearance when the channel is mounted in the support.

The invention also relates to the strip in combination with the support and, optionally, further in combination with a vehicle door carrying the support.

The invention also provides the method defined in claim 16.

### BRIEF DESCRIPTION OF THE DRAWINGS

Sealing and guiding strips in the form of window channels for windows in motor vehicle bodies, and embodying the invention, will now be described, by way of example only, with reference to the accompanying diagrammatic drawings in which:
Figure 1 is a side view of a vehicle door;
Figure 2 is a cross-section on the line II-II of Figure 1 to an enlarged scale; and
Figure 3 corresponds to Figure 2 but shows a modification.

### DETAILED DESCRIPTION OF THE EMBODIMENTS OF THE INVENTION

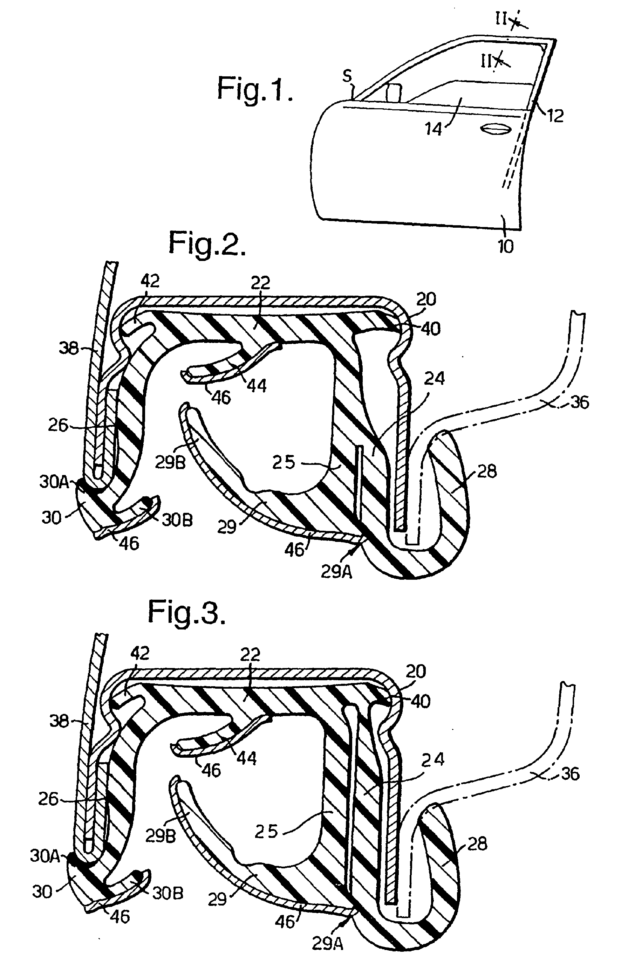

Figure 1 shows a vehicle door 10 carrying a window frame 12. A pane of window glass 14 is slidable in a vertical direction in the window frame 12 and can be raised from and lowered into the lower part of the door 10. The window frame 12 is produced from metal or other stiff material. In a manner to be explained in more detail, the window frame 12 is of channel-shape in cross-section and supports a window guiding and sealing channel, to be described in more detail below with reference to Figures 2 and 3, which is produced from flexible material such as plastics or rubber and in which the window glass 14 slides. The window sealing and guiding channel is designed to provide a weather-proof seal for the edge of the window glass and also to impose only low friction on the movement of the glass.

As shown in Figure 2, the window frame 12 comprises channel-shaped metal which produces a mounting channel 20, the mounting channel being supported by frame members 36 and 38 forming part of the window frame.

The window sealing and guiding channel is preferably produced by extrusion from the plastics or rubber or similar material and has a base 22 and side walls 25 and 26. The side wall 25 terminates in a large lip 29 extending for a substantial distance across the mouth of the channel. The side wall 26 terminates in a small lip 30 which has a portion 30B extending for a short distance across the mouth of the channel and another part 30A which overlaps the distal edge of the side wall of the mounting channel 20 which is supported by the panel 38.

On the outside of the side wall 25, there is integrally mounted a further lip 24 which has its root positioned approximately at the mid-point of the depth of the side wall 25 and which is curved over as shown at 28 to overlap the distal edge of the opposite side wall of the mounting channel 20, where it is supported by the panel 36.

The window sealing and guiding channel defines shoulders 40 and 42 on the outsides of the side walls 24 and 25 and positioned near the base 22 of the channel. The shoulders 40,42 engage indentations formed in the mounting channel 20 and thus locate the window sealing and guiding channel securely in position.

Figure 2 also shows that the window sealing and guiding channel includes a lip 44 at the base of the channel.

The outwardly facing surfaces of the lips 29,30 and 44 are covered with flocked layers 46.

In operation, the window glass enters the window sealing and guiding channel as the window is closed, the lip surfaces 29B and 30B being bent inwardly to allow passage of the window glass. The flocked layers 46 provide improved sealing and low friction. When the window glass has fully entered the sealing and guiding channel, it makes contact with the flocked layer 46 on the lip 44 which seals against the distal edge of the window glass.

When the window sealing and guiding channel is mounted in the mounting channel 20 as shown in Figure 2, the material of the lip 25 becomes pressed firmly against and overlaps a line shown at 29A which corresponds with the linear edge of the flocked layer 46 on the lip 29. A sharp and visually pleasing line of separation between the flocked layer 26 on the lip 29 and the unflocked surface of the lip 24 is thus produced at 29A.

When applying a flocked layer, it is very difficult to produce a sharp linear edge to the flocked area. The arrangement shown in Figure 2 thus overcomes this disadvantage by abutting the flocked layer 46 against the unflocked area of the lip 24.

Items in Figure 3 corresponding to those in Figure 1 are correspondingly referenced.

In the arrangement of Figure 3, the lip 24 is not integral with the outside of the wall 25 but is integral with the shoulder 40 extending from the base 22 of the window sealing and guiding channel. Otherwise, though, the construction is the same. In particular, the sharp edge 29A between the flocked area 46 on the lip 24 and the unflocked area of the lip 24 is again produced.

## Claims

1. A sealing and guiding channel-shaped strip mounting in a support (20) in use and for sealingly and guidingly receiving a panel-like member (14) which enters through the mouth of the channel, in which from the distal edge of one side wall (25) alongside the mouth of the channel a first lip (29) made of flexible material extends partway across the mouth of the channel, the externally facing surface of this lip carrying an applied surface layer (46) which extends over the lip (29) from a region near the distal edge of the lip to a termination (29A) on the outside of the said one side wall (25) for bearing against a side surface of the panel-like member (14) when in the channel, and a second lip (24) made of flexible material is positioned on the outside of the said one side wall (25) and extends alongside that wall and outwardly of the mouth of the channel, the material of the second lip (24) being in contact with the said termination (29A) of the applied layer (46), **characterised in that** the second lip (24) extends integrally from a position on the outside of the said one side wall (25) which is spaced from the mouth of the channel so as to be pressed into the contact with the said termination (29A) to produce a sharp visually apparent linear edge thereto when the channel is mounted on the support (20).

2. A strip according to claim 1, **characterised in that** the said position on the outside of the said one side wall (25) is substantially mid-way of the depth of the said one side wall (25).

3. A strip according to claim 1, **characterised in that** the said position on the outside of the said one side wall (25) is a position in the region of the base of the channel.

4. A strip according to any preceding claim, **characterised in that** the second lip (24) extends outwardly and embracingly around part of the support (20) for the channel.

5. A strip according to claim 4, **characterised in that** the support (20) for the channel comprises a stiff channel-shaped frame in which is received the sealing and guiding channel-shaped strip, the second lip (24) embracing a distal edge of one side wall of this stiff frame.

6. A strip according to any preceding claim, in which the support (20) is generally U-shaped and the strip is arranged such that the mounting of the strip in the support (20) causes the second lip (24) to be pressed into contact with said termination (29A) of the applied surface layer (46).

7. A strip according to any preceding claim, **characterised in that** another lip (30), made of flexible material, extends partway across the mouth of the channel from the distal edge of the opposite side wall (26) thereof.

8. A strip according to claim 7, **characterised in that** the externally facing surface of the lip (30) extending from the opposite side wall carries an applied surface layer (46).

9. A strip according to any preceding claim, in which the base (22) of the channel includes a further lip (44).

10. A strip according to claim 9, in which the further lip (44) carries an applied surface layer (46).

11. A strip according to any preceding claim, **characterised in that** the or each applied surface layer (46) is a layer of applied flock.

12. A strip according to any preceding claim, **characterised in that** it is for use as a window sealing and guiding channel in a motor vehicle body and where the panel-like member is the window glass (14).

13. A strip according to any one of the preceding claims, in which the base (22) of the channel is arranged for contacting the panel-like member (14) in use.

14. A strip according to any preceding claim, in combination with the support (20).

15. The strip and support of claim 14 in combination with a vehicle door carrying the support.

16. A method of sealing and guiding a panel-like member, the method including mounting a sealing and guiding channel-shaped strip in a support (20) for sealingly and guidingly receiving the panel-like member (14) which enters through the mouth of the channel, in which from the distal edge of one side wall (25) alongside the mouth of the channel a first lip (29) made of flexible material extends partway across the mouth of the channel, the externally facing surface of this lip carrying an applied surface layer (46) which extends over the lip (29) from a region near the distal edge of the lip to a termination (29A) on the outside of the said one side wall for bearing against a side surface of the panel-like member (14) when in the channel, and a second lip (24) made of flexible material is positioned on the outside of the said one side wall (25) and extends alongside that wall and outwardly of the mouth of the channel, the material of the second lip (24) being in contact with the said termination (29A) of the applied layer, wherein the second lip (24) extends integrally from a position on the outside of the said one side wall (25) which is spaced from the mouth of the channel so as to be pressed into the contact with the said termination (29A) to produce a sharp visually apparent linear edge thereto when the channel is mounted on the support.

17. A method according to claim 16, in which the said position on the outside of the said one side wall (25) is substantially mid-way of the depth of the said one side wall (25).

18. A method according to claim 16, in which the said position on the outside of the said one side wall (25) is a position in the region of the base of the channel.

19. A method according to any one of claims 16 to 18, in which the second lip (24) extends outwardly and embracingly around part of the support (20) for the channel.

20. A method according to claim 19, in which the support for the channel comprises a stiff channel-shaped frame in which is received the sealing and guiding channel-shaped strip, the second lip (24) embracing a distal edge of one side wall of this stiff frame.

21. A method according to any one of claims 16 to 20, wherein the support (20) is generally U-shaped and when the strip is mounted in the support (20), this causes the second lip (24) to be pressed into contact with said termination (29A) of the applied surface layer (46).

22. A method according to any one of claims 16 to 21, in which another lip made of flexible material, extends partway across the mouth of the channel from the distal edge of the opposite side wall (26) thereof.

23. A method according to claim 22, in which the externally facing surface of the lip (30) extending from the opposite side wall carries an applied surface layer (46).

24. A method according to any one of claims 16 to 23, in which the base (22) of the channel includes a further lip (44).

25. A method according to claim 24, in which the further lip (44) carries an applied surface layer (46).

26. A method according to any one of claims 16 to 25, in which the or each applied surface layer (46) is a layer of applied flock.

27. A method according to any one of claims 16 to 26, for sealing and guiding the panel-shaped member in a motor vehicle body and where the panel-like member is the window glass (14).

28. A method according to any one of claims 16 to 27, in which the base of the channel contacts the panel-like member in use.

## Patentansprüche

1. Dichtendes und führendes, kanalförmiges Band, das unter dessen Benutzung in einem Halter (20) befestigt ist, und für ein dichtendes und führendes Aufnehmen eines plattenähnlichen Elements (14), das durch die Öffnung des Kanals eintritt, in dem sich von der entfernten Kante einer Seitenwand (25) entlang der Öffnung des Kanals eine erste Lippe (29), die aus einem flexiblen Material gebildet ist, teilweise über die Öffnung des Kanals erstreckt, wobei die nach außen weisende Fläche dieser Lippe eine aufgebrachte Oberflächenschicht (46) trägt, die sich über die Lippe (29) von einem Bereich nahe der entfernten Kante der Lippe zu einem Ende (29A) auf der Außenseite der einen Seitenwand (25) erstreckt, um sich gegen eine Seitenfläche des plattenähnlichen Elements (14) dann, wenn es sich in dem Kanal befindet, anzulegen, und wobei eine zweite Lippe (24), die aus einem flexiblen Material gebildet ist, auf der Außenseite der einen Seitenwand (25) positioniert ist und sich entlang dieser Wand und nach außen von der Öffnung des Kanals erstreckt, wobei sich das Material der zweiten Lippe (24) in Kontakt mit dem Ende (29A) der aufgebrachten Schicht (46) befindet, **dadurch gekennzeichnet, dass** sich die zweite Lippe (24) integral von einer Position auf der Außenseite der einen Seitenwand (25), die von der Öffnung des Kanals beabstandet ist, so erstreckt, um in den Kontakt mit dem Ende (29A) gedrückt zu werden, um eine scharfe, visuell zu sehende, lineare Kante damit zu erzeugen, wenn der Kanal an dem Halter (20) montiert ist.

2. Band nach Anspruch 1, **dadurch gekennzeichnet, dass** die Position auf der Außenseite der einen Seitenwand (25) im Wesentlichen in der Mitte der Tiefe der einen Seitenwand (25) liegt.

3. Band nach Anspruch 1, **dadurch gekennzeichnet, dass** die Position auf der Außenseite der einen Seitenwand (25) eine Position in dem Bereich der Basis des Kanals ist.

4. Band nach einem vorhergehenden Anspruch, **dadurch gekennzeichnet, dass** sich die zweite Lippe (24) nach außen und um einen Teil des Halters (20) für den Kanal herum erstreckt.

5. Band nach Anspruch 4, **dadurch gekennzeichnet, dass** der Halter (20) für den Kanal einen steifen, kanalförmigen Rahmen aufweist, in dem das dichtende und führende, kanalförmige Band aufgenommen ist, wobei die zweite Lippe (24) eine entfernte Kante einer Seitenwand dieses steifen Rahmens umschließt.

6. Band nach einem vorhergehenden Anspruch, wobei der Halter (20) im Wesentlichen U-förmig ist und das Band so angeordnet ist, dass die Befestigung des Bands in dem Halter (20) bewirkt, dass die zweite Lippe (24) in einen Kontakt mit dem Ende (29A) der aufgebrachten Oberflächenschicht (46) gedrückt wird.

7. Band nach einem vorhergehenden Anspruch, **dadurch gekennzeichnet, dass** sich eine andere Lippe (30), die aus einem flexiblen Material gebildet ist, teilweise über die Öffnung des Kanals von der entfernten Kante der gegenüberliegenden Seitenwand (26) davon erstreckt.

8. Band nach Anspruch 7, **dadurch gekennzeichnet, dass** die nach außen weisende Fläche der Lippe (30), die sich von der gegenüberliegenden Seitenwand aus erstreckt, eine aufgebrachte Oberflächenschicht (46) trägt.

9. Band nach einem vorhergehenden Anspruch, wobei die Basis (22) des Kanals eine weitere Lippe (44) umfasst.

10. Band nach Anspruch 9, wobei die weitere Lippe (44) eine aufgebrachte Oberflächenschicht (46) trägt.

11. Band nach einem vorhergehenden Anspruch, **dadurch gekennzeichnet, dass** die oder jede aufgebrachte Oberflächenschicht (46) eine Schicht aus aufgebrachter Flockfaser ist.

12. Band nach einem vorhergehenden Anspruch, **dadurch gekennzeichnet, dass** es für die Verwendung als Fensterdichtung und Führungskanal in einer Fahrzeugkarosserie dient, und wobei das plattenähnliche Element das Fensterglas (14) ist.

13. Band nach einem der vorhergehenden Ansprüche, wobei die Basis (22) des Kanals für einen Kontakt mit dem plattenähnlichen Element (14) in Benutzung angeordnet ist.

14. Band nach einem vorhergehenden Anspruch, in Kombination mit dem Halter (20).

15. Das Band und der Halter nach Anspruch 14 in Kombination mit einer Fahrzeugtür, die den Halter trägt.

16. Verfahren zum Dichten und Führen eines plattenähnlichen Elements, wobei das Verfahren ein Befestigen eines dichtenden und führenden, kanalförmigen Bands in einem Halter (20) für ein dichtendes und führendes Aufnehmen des plattenähnlichen Elements (14) umfasst, das durch die Öffnung des Kanals hindurchtritt, in dem sich von der entfernten Kante einer Seitenwand (25) entlang der Öffnung des-Kanals eine erste Lippe (29), die aus einem flexiblen Material gebildet ist, teilweise über die Öffnung des Kanals erstreckt, wobei die nach außen weisende Fläche dieser Lippe eine aufgebrachte Oberflächenschicht (46) trägt, die sich über die Lippe (29) von einem Bereich nahe der entfernten Kante der Lippe zu einem Ende (29A) auf der Außenseite der einen Seitenwand erstreckt, um sich gegen eine Seitenfläche des plattenähnlichen Elements (14) anzulegen, wenn es sich in dem Kanal befindet, und wobei eine zweite Lippe (24), die aus einem flexiblen Material gebildet ist, auf der Außenseite der einen Seitenwand (25) positioniert ist und sich entlang dieser Wand und nach außen von der Öffnung des Kanals erstreckt, wobei das Material der zweiten Lippe (24) in Kontakt mit dem Ende (29A) der aufgebrachten Schicht steht, wobei sich die zweite Lippe (24) integral von einer Position auf der Außenseite der einen Seitenwand (25), die von der Öffnung des Kanals beabstandet ist, aus erstreckt, um so in den Kontakt mit dem Ende (29A) gedrückt zu werden, um eine scharfe, sichtbar auftretende, lineare Kante damit zu bilden, wenn der Kanal an dem Halter befestigt ist.

17. Verfahren nach Anspruch 16, wobei die Position auf der Außenseite der einen Seitenwand (25) im Wesentlichen in der Mitte der Tiefe dieser einen Seitenwand (25) liegt.

18. Verfahren nach Anspruch 16, wobei die Position auf der Außenseite der einen Seitenwand (25) eine Position in dem Bereich der Basis des Kanals ist.

19. Verfahren nach einem der Ansprüche 16 bis 18, wobei sich die zweite Lippe (24) nach außen und um einen Teil des Halters (20) für den Kanal herum erstreckt.

20. Verfahren nach Anspruch 19, wobei der Halter für den Kanal einen steifen, kanalförmigen Rahmen aufweist, in dem das dichtende und führende, kanalförmige Band aufgenommen ist, wobei die zweite Lippe (24) eine entfernte Kante einer Seitenwand dieses steifen Rahmens umschließt.

21. Verfahren nach einem der Ansprüche 16 bis 20, wobei der Halter (20) im Wesentlichen U-förmig ist, und wenn das Band in dem Halter (20) befestigt ist, bewirkt dies, dass die zweite Lippe (24) in Kontakt mit dem Ende (29A) der aufgebrachten Oberflächenschicht (46) gedrückt wird.

22. Verfahren nach einem der Ansprüche 16 bis 21, wobei sich eine andere Lippe, die aus einem flexiblen Material gebildet ist, teilweise über die Öffnung des Kanals von der entfernten Kante der gegenüberliegenden Seitenwand (26) davon aus erstreckt.

23. Verfahren nach Anspruch 22, wobei die nach außen weisende Fläche der Lippe (30), die sich von der gegenüberliegenden Seitenwand aus erstreckt, eine aufgebrachte Oberflächenschicht (46) trägt.

24. Verfahren nach einem der Ansprüche 16 bis 23, wobei die Basis (22) des Kanals eine weitere Lippe (44) umfasst.

25. Verfahren nach Anspruch 24, wobei die weitere Lippe (44) eine aufgebrachte Oberflächenschicht (46) trägt.

26. Verfahren nach einem der Ansprüche 16 bis 25, bei dem die oder jede aufgebrachte Oberflächenschicht (46) eine Schicht aus aufgebrachter Flockfaser ist.

27. Verfahren nach einem der Ansprüche 16 bis 26, um das plattenförmige Element in einer Fahrzeugkarosserie zu dichten und zu führen, und wobei das plattenähnliche Element das Fensterglas (14) ist.

28. Verfahren nach einem der Ansprüche 16 bis 27, wobei die Basis des Kanals das plattenähnliche Element in Benutzung berührt.

## Revendications

1. Bande de guidage et d'étanchéité en forme de canal montée dans un support (20) à utiliser pour la réception étanche et guidée d'un élément en forme de panneau (14) qui entre à travers l'ouverture du canal, dans lequel depuis le bord distal d'une paroi latérale (25) le long de l'ouverture du canal un premier rebord (29) composé d'un matériau flexible s'étend en partie sur l'ouverture du canal, la surface orientée vers l'extérieur de ce rebord portant une couche de surface appliquée (46) qui s'étend sur le rebord (29) depuis une région proche du bord distal du rebord jusqu'à une terminaison (29A) située sur l'extérieur de ladite une paroi latérale (25) pour reposer contre une surface latérale de l'élément en forme de panneau (14) lorsque celui-cl se trouve dans le canal, et un second rebord (24) composé d'un matériau flexible est positionné sur l'extérieur de ladite une paroi latérale (25) et s'étend le long de cette paroi et vers l'extérieur de l'ouverture du canal, le matériau du second rebord (24) étant en contact avec ladite terminaison (29A) de la couche appliquée (46), **caractérisée en ce que** le second rebord (24) s'étend intégralement depuis une position sur l'extérieur de ladite une paroi latérale (25) qui est espacée de l'ouverture du canal de manière à être pressé en contact avec ladite terminaison (29A) pour y produire un bord linéaire coupant visuellement apparent lorsque le canal est monté sur le support (20).

2. Bande selon la revendication 1, **caractérisée en ce que** ladite position sur l'extérieur de ladite une paroi latérale (25) est sensiblement à mi-chemin de la profondeur de ladite une paroi latérale (25).

3. Bande selon la revendication 1, **caractérisée en ce que** ladite position sur l'extérieur de ladite une paroi latérale (25) est une position dans la région de la base du canal.

4. Bande selon l'une quelconque des revendications précédentes, **caractérisée en ce que** le second rebord (24) s'étend vers l'extérieur et s'enroule autour d'une partie du support (20) pour le canal.

5. Bande selon la revendication 4, **caractérisée en ce que** le support (20) pour le canal comprend un cadre en forme de canal raide dans lequel est reçue la bande d'étanchéité et de guidage en forme de canal, le second rebord (24) englobant un bord distal d'une paroi latérale de ce cadre raide.

6. Bande selon l'une quelconque des revendications précédentes, dans laquelle le support (20) est globalement en forme de U et la bande est agencée de sorte que le montage de la bande dans le support (20) amène le second rebord (24) à être pressé en contact avec ladite terminaison (29A) de la couche de surface appliquée (46).

7. Bande selon l'une quelconque des revendications précédentes, **caractérisée en ce qu'**un autre rebord (30), composé d'un matériau flexible, s'étend en partie sur l'ouverture du canal depuis le bord distal de la paroi latérale opposée (26) de celui-ci.

8. Bande selon la revendication 7, **caractérisée en ce que** la surface orientée vers l'extérieur du rebord (30) s'étendant depuis la paroi latérale opposée porte une couche de surface appliquée (46).

9. Bande selon l'une quelconque des revendications précédentes, dans laquelle la base (22) du canal comprend un autre rebord (44).

10. Bande selon la revendication 9, **caractérisée en ce que** l'autre rebord (44) porte une couche de surface appliquée (46).

11. Bande selon l'une quelconque des revendications précédentes, **caractérisée en ce que** la ou chaque couche de surface appliquée (46) est une couche de floc appliqué.

12. Bande selon l'une quelconque des revendications précédentes, **caractérisée en ce qu'**elle est utilisée comme canal d'étanchéité et de guidage de fenêtre dans une carrosserie de véhicule automobile et où l'élément en forme de panneau est la vitre (14).

13. Bande selon l'une quelconque des revendications précédentes, dans laquelle la base (22) du canal est agencée pour être en contact avec l'élément en forme de panneau (14) en cours d'utilisation.

14. Bande selon l'une quelconque des revendications précédentes, en association avec le support (20).

15. Bande et support selon la revendication 14 en association avec une portière de véhicule portant le support.

16. Procédé d'étanchéité et de guidage d'un élément en forme de panneau, le procédé comprenant le montage d'une bande d'étanchéité et de guidage en forme de canal dans un support (20) pour la réception étanche et guidée de l'élément en forme de panneau (14) qui entre à travers l'ouverture du canal, dans lequel depuis le bord distal d'une paroi latérale (25) le long de l'ouverture du canal un premier rebord (29) composé d'un matériau flexible s'étend en partie sur l'ouverture du canal, la surface orientée vers l'extérieur de ce rebord portant une couche de surface appliquée (46) qui s'étend sur le rebord (29) depuis une région proche du bord distal du rebord jusqu'à une terminaison (29A) située sur l'extérieur de ladite une paroi latérale pour reposer contre une surface latérale de l'élément en forme de panneau (14) lorsque celui-ci se trouve dans le canal, et un second rebord (24) composé d'un matériau flexible est positionné sur l'extérieur de ladite une paroi latérale (25) et s'étend le long de cette paroi et vers l'extérieur de l'ouverture du canal, le matériau du second rebord (24) étant en contact avec ladite terminaison (29A) de la couche appliquée, dans lequel le second rebord (24) s'étend intégralement depuis une position sur l'extérieur de ladite une paroi latérale (25) qui est espacée de l'ouverture du canal de manière à être pressé en contact avec ladite terminaison (29A) pour y produire un bord linéaire coupant visuellement apparent lorsque le canal est monté sur le support.

17. Procédé selon la revendication 16, dans lequel ladite position sur l'extérieur de ladite une paroi latérale (25) est sensiblement à mi-chemin de la profondeur de ladite une paroi latérale (25).

18. Procédé selon la revendication 16, dans lequel ladite position sur l'extérieur de ladite une paroi latérale (25) est une position dans la région de la base du canal.

19. Procédé selon l'une quelconque des revendications 16 à 18, dans lequel ledit rebord (24) s'étend vers l'extérieur et s'enroule autour d'une partie du support (20) pour le canal.

20. Procédé selon la revendication 19, dans lequel le support pour le canal comprend un cadre en forme de canal raide dans lequel est reçue la bande d'étanchéité et de guidage en forme de canal, le second rebord (24) englobant un bord distal d'une paroi latérale de ce cadre raide.

21. Procédé selon l'une quelconque des revendications 16 à 20, dans lequel le support (20) est globalement en forme de U et lorsque la bande est montée dans le support (20), cela amène le second rebord (24) à être pressé en contact avec ladite terminaison (29A) de la couche de surface appliquée (46).

22. Procédé selon l'une quelconque des revendications 16 à 21, dans lequel un autre rebord, composé d'un matériau flexible, s'étend en partie sur l'ouverture du canal depuis le bord distal de la paroi latérale opposée (26) de celui-ci.

23. Procédé selon la revendication 22, dans lequel la surface orientée vers l'extérieur du rebord (30) s'étendant depuis la paroi latérale opposée porte une couche de surface appliquée (46).

24. Procédé selon l'une quelconque des revendications 16 à 23, dans lequel la base (22) du canal comprend un autre rebord (44).

25. Procédé selon la revendication 24, dans lequel l'autre rebord (44) porte une couche de surface appliquée (46).

26. Procédé selon l'une quelconque des revendications 16 à 25, dans lequel la ou chaque couche de surface appliquée (46) est une couche de floc appliqué.

27. Procédé selon l'une quelconque des revendications 16 à 26, pour l'étanchéité et le guidage de l'élément en forme de panneau dans une carrosserie de véhicule automobile et où l'élément en forme de panneau est la vitre (14).

28. Procédé selon l'une quelconque des revendications 16 à 27, dans lequel la base du canal est en contact avec l'élément en forme de panneau en cours d'utilisation.
